Europäisches Patentamt

European Patent Office

Office européen des brevets

(11) Publication number: **0 127 248**
**B1**

(12) **EUROPEAN PATENT SPECIFICATION**

(45) Date of publication of patent specification: **22.07.87**

(21) Application number: **84300499.5**

(22) Date of filing: **26.01.84**

(51) Int. Cl.⁴: **B 21 C 37/06,** B 21 D 51/16,
F 16 L 9/18

(54) **Structural members and methods of fabricating the same.**

(30) Priority: **23.05.83 US 497001**
**28.06.83 US 508509**

(43) Date of publication of application:
**05.12.84 Bulletin 84/49**

(45) Publication of the grant of the patent:
**22.07.87 Bulletin 87/30**

(84) Designated Contracting States:
**AT BE CH DE FR GB IT LI LU NL SE**

(56) References cited:
**EP-A-0 023 242**
**DE-A-1 452 393**
**DE-A-1 777 259**
**DE-A-2 512 565**
**DE-B-1 088 912**
**DE-C- 85 713**
**GB-A-2 081 139**
**SU-A- 673 800**
**US-A-3 085 146**
**US-A-3 128 536**

(73) Proprietor: **UNIVERSAL SPIRALWELD
ENTERPRISES INC.
25 Lackawanna Place
Bloomfield New Jersey 07003 (US)**

(72) Inventor: **Smith, Richard H.
2926 Sing Sing Road, RD no 1
Elmira New York 14903 (US)**

(74) Representative: **Bayliss, Geoffrey Cyril et al
BOULT, WADE & TENNANT 27 Furnival Street
London EC4A 1PQ (GB)**

(56) References cited:
**SOVIET INVENTIONS ILLUSTRATED, section
P,Q, week C 13, May 7, 1980, DERWENT
PUBLICATIONS LTD., London, pages 6,7**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates generally to a structural member as well as to methods of forming same. More particularly, the member is double-walled, is wound helically and has a helically wound stiffening spacer between its walls.

Long cylindrical members of large diameter are known for use as platform supports for offshore oil drilling operations, and are normally fabricated from a plurality of cylindrical plate sections seamed welded along contiguous or overlapping edges between sections to form a single-walled or a double-walled vessel. Circular reinforcing ribs are needed as well as longitudinal ribbing, and sometimes spaced bulkheads are required to ensure structural integrity. The fabrication of especially such large and heavy vessels is, however, extremely time consuming and costly requiring numerous labour-consuming steps during the welding and weld inspection operations.

On the other hand, cylinder conduits, tubes and piping have been fabricated more quickly and less laboriously by helically winding sheets of material and sealing together contiguous edges or surfaces of each pair of successive windings. Normally, however, such as helical seam pipe or tube is designed principally for use as a single-walled conduit for fluids (pressurized or not), communication lines, and the like, requiring a relatively small diameter of sufficient shell strength without additional reinforcements.

DE—A—1,452,393 discloses a tubular, helically wound structural member having spaced inner and outer interconnected walls formed by helically winding a tube of rectangular cross-section and welding the tube turns together.

Reference is also made to SU—A—673800 which, whilst in a different field of endeavour, discloses a double-walled tube for conducting pressurised liquid. The tube has inner and outer walls formed by seam welded spirally wound strip. The walls are separated by a spiral rib formed by the external spirally wound seam weld on said inner wall of the tube.

The invention provides a tubular, helically wound structural member having spaced inner and outer interconnected walls wherein said inner wall comprises a helically curved, separate strip of material forming an inner tubular liner, said outer wall comprises a helically curved, separate strip of material forming an outer tubular shell, and having a helically curved, separate rib stiffener between and in contact with said liner and said shell, said stiffener spanning contiguous edges at successive turns of said inner tubular liner and spanning contiguous edges at successive turns of said outer tubular shell, there being welds securing together said inner liner edges, and welds securing together said outer shell edges, and said rib stiffener at the edges of the inner lines and at the edges of the outer shell being secured to said inner liner and to said outer shell via said welds.

Such a member is relatively easy to fabricate at substantially less cost and reduced labour than known structures, yet has improved strength characteristics permitting use of relatively thin shells.

The spacer means may comprise structural beams utilised as stiffeners and secured to the spaced walls of the shell and liner via the seaming along said contiguous edges.

More specifically, the structural member may be fabricated by applying to the leading edge of the inner wall a first section of a longitudinally split stiffening rib (which may be a honeycomb I-beam) before helically winding the inner wall, contiguous edges of each pair of successive turns being seamed, the remaining split section of the rib being welded to the first wound rib and the outer wall wound helically over and welded thereto as well as along contiguous edges.

The invention also provides a method of forming a tubular, helically wound structural member having spaced inner and outer interconnected walls wherein the steps of helically winding one strip of material to form an inner tubular liner as said inner wall helically winding a separate strip of material to form an outer tubular shell as said outer wall; disposing a continuous, helically curved, separate rib stiffener between and in contact with said inner liner and said outer shell, said stiffener spanning contiguous edges at successive turns of said liner and spanning contiguous edges at successive turns of said shell welding said liner edges together and to said stiffener and welding said shell edges together and to said stiffener.

The method may also include the further steps of longitudinally cutting through said structural member along a single line, spreading apart opposed sections of said member after cutting, and joining said sections together by decking material to form a ship's hull construction.

The method may be carried out in a water bouyant housing floating on a body of water, said housing having a sealed opening in its side wall at about the water level and may include the steps of extending the structural member through said opening while forming said member; and supporting said member by floating same in the body of water.

The method may further include ballast controlling said housing for adjusting the inclination of said housing in relation to any inclination of said structural member outside said housing.

Figure 1 is a side elevational view of a helically formed structural member according to an embodiment of the invention;

Figure 2 is a perspective view of the structural member in the process of being fabricated within a floating work housing;

Figures 3 and 4 are perspective views of a rib stiffener disposed between the walls of the present member, and being formed from a structural I-beam of honeycomb constructions;

Figure 5 is a side view of the structural member according to one embodiment of the invention in the process of fabrication taken substantially along the line 5—5 of Figure 2;

Figure 6 is a typical section of the double-walled internally stiffened member according to an embodiment of the invention, taken substantially along the line 6—6 of Figure 5;

Figure 7 is a perspective view illustrating the preferred technique used in fabricating the structural member according to the invention;

Figures 8, 9, 10 and 11 are sectional views showing the steps employed in fabricating the Figure 5 member, taken substantially along the line 8—8, 9—9, 10—10 and 11—11 of Figure 7;

Figure 12, is a slightly enlarged detail view of a typical pair of support and drive rolls provided for the member during fabrication;

Figure 13 is an enlarged detail view of one of the several drive support rolls provided for rotating the structural vessel during fabrication;

Figure 14 is an enlarged detail view of a liquid seal between an opening in the work housing through which the formed structural member extends;

Figures 15 and 16 are respectively side and top views of the member during fabrication, the work housing being shown in section;

Figure 17 is an end view of the completed member;

Figure 18 is a view showing the member of Figure 17 altered in shape to form a ship's hull of different widths.

Figure 19 is a perspective view illustrating the technique used in fabricating the structural member according to another embodiment of the invention;

Figure 20 is a cross-sectional view of the formed member taken substantially along the line 20—20 of Figure 19;

Figure 21 is a cross-sectional view of the inner liner with a spacer section secured thereto, taken substantially along the line 21—21 of Figure 19; and

Figure 22 is a cross-sectional view of the outer shell with a spacer section secured thereto, taken substantially along the line 22—22 of Figure 19.

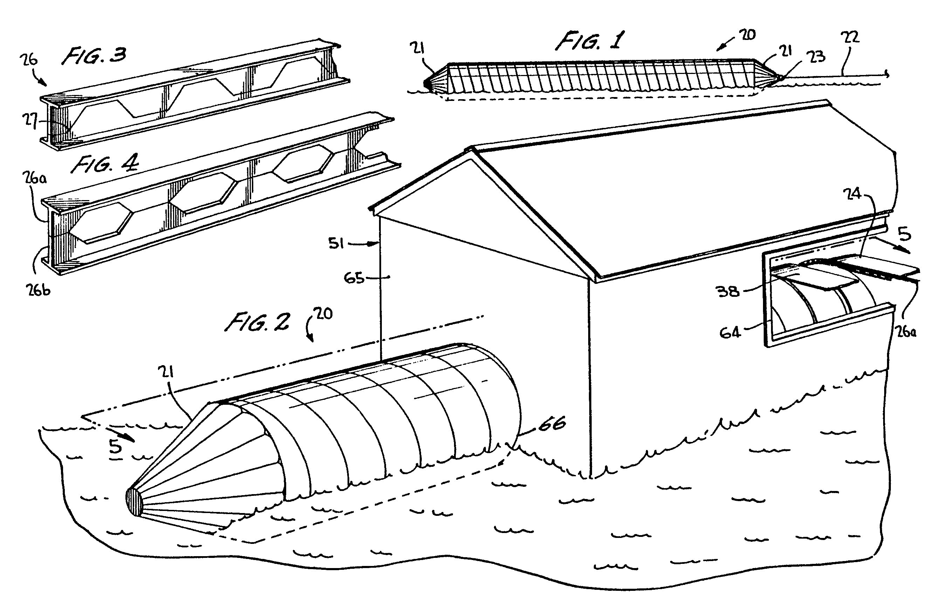

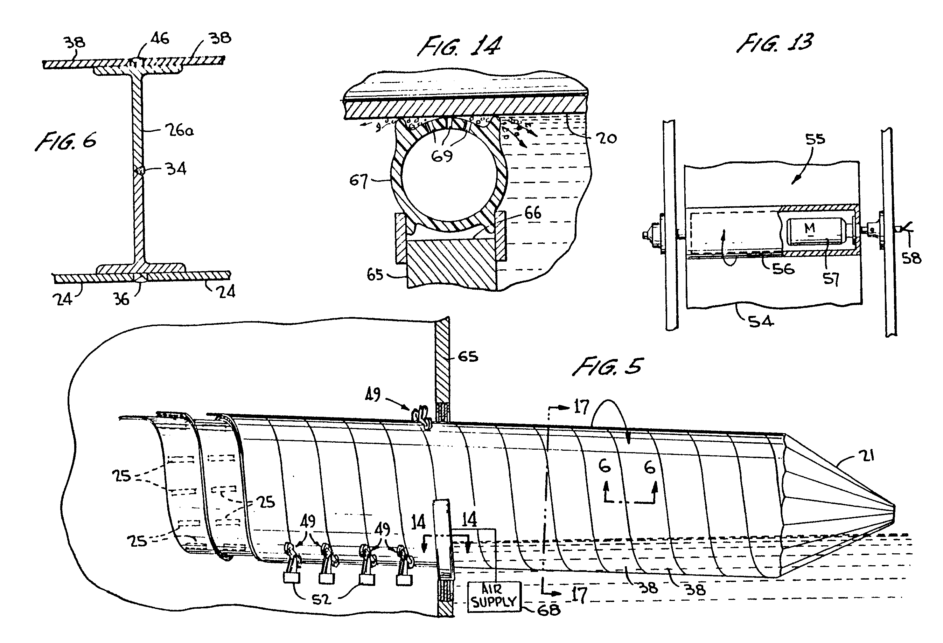

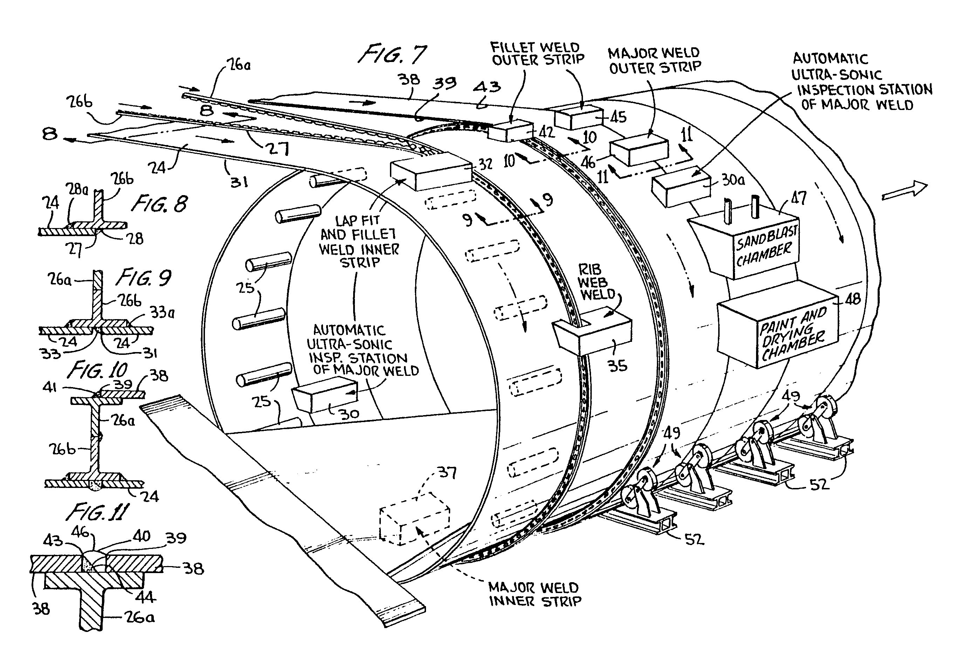

Turning now to the drawings wherein like reference characters refer to like and corresponding parts throughout the several views, a completed helical seam structural member in the form of a vessel is shown in Figure 1, generally designated 20, as having end caps 21 of, for example, conical shape, which may be secured in place in any conventional manner for closing the opposed ends of the formed vessel. The vessel is hollow and preferably cylindrical, although it may be of varying diameter without departing from the invention, and may thus be towed in a body of water by means of a tow line 22 hooked as at 23.

Reference is now made to Figure 7 which illustrates the essential features used in fabricating the helical seam structural member according to one embodiment of the invention. An inner strip 24 of material, such as plate steel, is wound from a supply (not shown) in a helical manner about a series of forming rolls 25 to form an inner tubular liner. Appropriate tube forming means will be utilized for forming the helical turns from a continuous or laterally spliced strip. A bottom longitudinal half 26b of a rib stiffener produced from a structural I-beam (or double T-beam) 26 (Figure 3) is welded along a leading edge 27 (Figure 8) of the inner strip. Top and bottom halves 26a and 26b are produced in a known manner by separating the webs of beams along undulating or trapezoidal lines 28 to form individual beam sections 26a and 26b, the projecting regions being oppositely disposed and subsequently welded together, in a manner to be hereinafter described, so as to produce a known honeycomb beam section of the type shown in Figure 4. Before the helical winding of inner strip 24, beam section 26b is welded as at 28 and/or 28a (Figure 8) along leading edge 27 of the strip, substantially one-half of the flange of section 26b extending outwardly of the edge as shown. This extended flange portion is lapped over a trailing edge 31 of the next adjacent formed helical turn (Figure 9), as at station 32, and a fillet weld 33 and/ or 33a is applied at such station for joining the contiguous leading and trailing edges of the turns together via beam section 26b. In the meantime, beam section 26a is wound over web section 26b in such a manner that projecting web regions are oppositely disposed to form a honeycomb beam structure of the type shown in Figure 4. These projecting web regions are subsequently welded together as at 34 (Figures 6 and 10) at station 37 for completing the weld joint between the leading and trailing edges and for filling the gap therebetween. An Automatic Ultrasonic Inspection Station 30 of the inner strip major weld is located as shown in Figure 7.

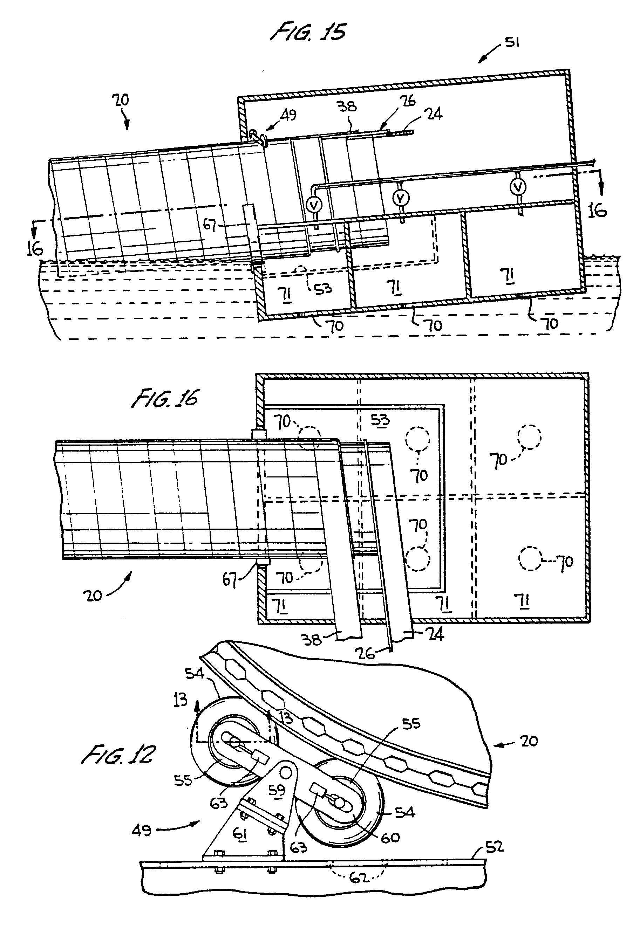

An outer strip 38 of material, such as plate steel, is then helically wound, to form an outer tubular shell, over beam section 26b with its trailing edge 39 (Figure 10) overlapping the flange of this section, whereafter a fillet weld 41 is applied at station 42. The leading edge 43 of the outer strip is then fillet welded as at 44 (Figure 11) to the contiguous edge of the next adjacent turn via beam section 26b, at station 45, and a major weld 40 completes the welded seam and fills the gap between contiguous edges of the outer strip turns, at station 46. An Automatic Ultrasonic Inspection Station 30a of the outer strip major weld is disposed as in Figure 7. A sandblast chamber 47 as well as a paint and drying chamber 48 are provided for carrying out the exterior finishing operations of the formed member.

Support roller assemblies 49 (Figures 5 and 7) are provided at opposite lower sides of the formed member and form a cradle support within work housing 51 (Figure 2), these roller assemblies being mounted on transverse box beams 52, or the like, support on a partition floor 53 (Figure 15) provided within the work housing. Each support roller assembly 49, shown in more detail in Figures 12 and 13, comprises a pair of pneumatic wheels or tyres 54 each containing an internal hydraulic drive motor unit 55 as including a hub 56 on which the wheel is mounted for rotation therewith, and a hydraulic drive motor 57. The motor is stationary and is supplied via hydraulic lines 58 so that its output drives hub 56 which in turn rotates wheel 54. These drive motors are relief valved for establishing a synchronized speed between the drive rolls, and are suitably controlled for variation and reversability, if necessary. A support bracket 59 for the wheel pair, on which a wheel arm support 60 is attached, has flanges mating with flanges of an underlying bracket 61, with fasteners extending through elongated slots in one of the flanges for adjusting the wheels toward and away from the rotational axis of the formed member to adjust for any diameter variation of the wheels. And, spaced holes 62 along each box beam permit the roll support assembly to be adjusted to accommodate different sized structural member diameters. Pairs of support wheels of each assembly are typically located along the seamed edges of the outer helical turns (Figure 7) for driving the member during fabrication in the direction of the major arrow thereof. Such a support and drive of the member allows for several anticipated minor irregularities, such as out-of-round, weld profiles, chording from castellated beam reinforcing ribs as well as to transmit the expected loads without distortion of the outer shell.

And, synchronized steering motors 63 may be provided for steering the wheels along the outer seams for positively maintaining the support and drive wheels 54 along the reinforcing ribs of the structure with precise forward feed for well gap control.

Work housing 51 has an access opening 64 in a side wall thereof (Figure 2) through which the inner and outer strips and the reinforcing ribs are introduced from their respective storage supplies for the fabrication of the structural member according to a preferred embodiment of the invention. And, an end wall 65 of the housing has an opening 66 (Figures 14 to 16) through which the fabricated end of the vessel progressively extends. A water lock in the form of a pneumatic seal is provided along at least the bottom half edge of this opening for sealing the interior of the housing against water entry. Such a seal may be in the form of a closed-ended arcuate tube 67 of elastomeric material supplied with air under pressure from an air supply 68 and having a plurality of air openings 69 along the inner wall thereof through which air is emitted for creating both a pneumatic seal as well as an antifriction bearing. Along the upper half of the edge of opening 66 are provided a plurality of support and drive roller assemblies 49 similar in construction and operation to that described with reference to Figure 12. These rollers function to compensate for the nose-down or nose-up loads created during fabrication of the vessel depending on the extent of the member outwardly of the housing holding down the member against the housing seal should the housing and the member be ballasted out of synchronization.

The work housing floats on a body of water (Figure 2) which may be the same as that in which the formed member floats as it extends from the housing. And, as the formed member progressively extends outwardly of end walls 65, the housing will tend to incline slightly downward at this end. In order to avoid any damage to the pneumatic seal and/or to the assemblies 49 surrounding the end wall opening, the housing is water ballast controlled by the provision of ballast tanks 71 (Figures 15, 16) connected to a suitable compressed air supply through valving for positively adjusting the inclination of the housing to conform to the vessel inclination. Openings 70 in the bottoms of the tanks facilitate ballast control in a known manner.

It should be pointed out that opening 66 can be varied to accommodate the fabrication of members of different diameters by provision of fish plates, or the like, at the opening on which the pneumatic seal and the roller 49 are mounted.

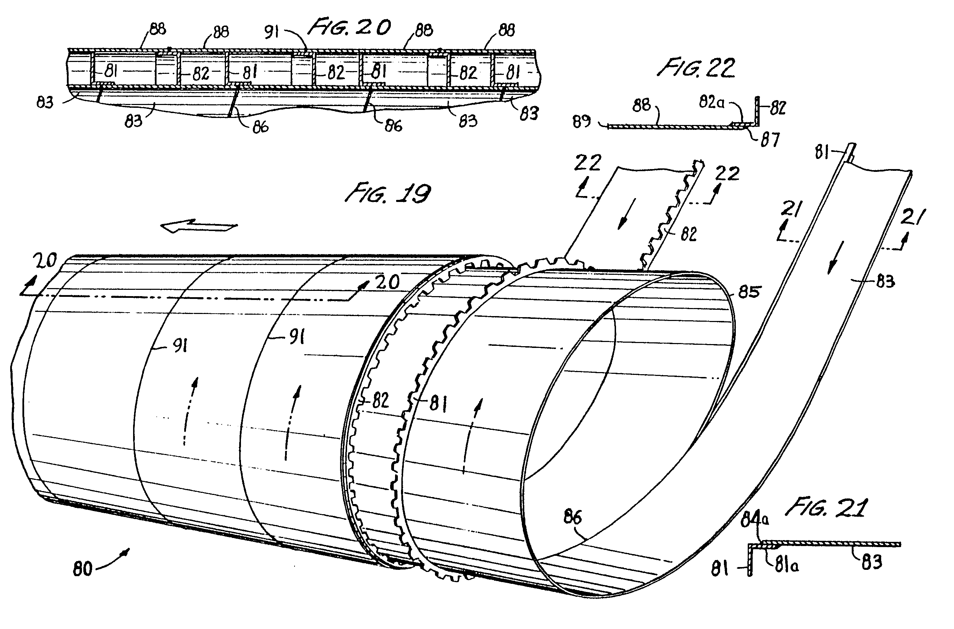

A helical seamed, double-walled structural member according to another embodiment of the invention is shown in Figure 19, generally designated 80, in the process of being fabricated, with a portion thereof, shown at the left in the Figure, having been completed. The member is hollow and preferably cylindrical, although it may be of varying diameter, and may have conical end caps to facilitate easy towing in a body of water, similarly as described with reference to Figure 2.

As will be seen, the structural member according to this other embodiment of the invention is similar to the aforedescribed one embodiment of the member in that it comprises a helically wound inner liner surrounded in spaced relation by a helically wound outer shell with helically wound spacer means between the liner and shell secured thereto via means which also secures the contiguous liner edges together and which secures the contiguous shell edges together. Such spacer means, which is continuous and also functions as a stiffener, may for example be produced in a known manner from a structural I-beam, double T-beam, channel-shaped beam or Z-shaped beam by separating the beam web along an undulating or trapezoidal line to form individual beam sections 81 and 82 having castellated webs which facilitate bending while being helically wound. Otherwise, continuous bars of rectangular cross-section capable of bending when helically wound, can be utilized without departing from the invention.

In the process of fabricating the member, a continuous inner strip 83 of material, such as plate steel, is wound from a supply (not shown) in a helical manner about a series of forming rolls such as shown in Figure 7, to thereby form an inner tubular liner. Appropriate tube forming means will be utilized for forming the helical turns from a continuous or laterally spliced strip. Before winding, beam section 81 is fillet welded for example along a leading edge 84 of the inner strip with approximately one-half its flange 81a extending outwardly of this edge. This extended flange portion is lapped over a trailing edge 85 of the next adjacent formed helical turn and a butt weld 86 is applied for joining the contiguous leading and trailing edges of the inner turns together via beam section 81.

Beam section 82 may then be fillet welded along a trailing edge 87 of an outer strip 88 of material, such as plate steel, with substantially one-half flange 82a of section 82 extending outwardly of this edge as shown. The outer strip is then helically wound about the inner strip and is maintained axially shifted relative thereto such that the edges of the outer strip are out of alignment with the edges of the inner strip, as shown in Figures 19 and 20, whereby the web tips of beam section 81 confront the inner surface of strip 88, and the web tips of beam section 82 confront the outer surface of strip 83. In such manner, the web tips of the beam sections are respectively disposed between the opposing edges of the strips which confront them. And, a leading edge 89 of outer strip 88 overlaps the exposed portion of flange 82a on an already wound outer strip and is fillet welded to the trailing edge of that strip after which the seam at these edges is butt welded together as at 91 via beam section 82. The web tips of both beam sections are then fillet or fusion welded to the respective surfaces of the wound strips which they confront.

Support roller assemblies are provided at opposite lower sides of the formed member and form a cradle support within a work housing, similarly as described with reference to Figure 5. And, such cradle support may be located within a work housing which is water buoyant and which has an opening in a side wall thereof through which the formed structural member progressively extends in the direction of the arrow of Figure 19 during the fabrication process, all as described with reference to Figure 5.

Moreover, while the outer strip is being wound in place, concrete may be pumped into the space between the strips for structural purposes, weep holes being provided in the inner liner for known purposes. And, the inner liner may be covered with a thin concrete lining during the fabrication process to protect the steel member against corrosion when, for example, used as a water aqueduct.

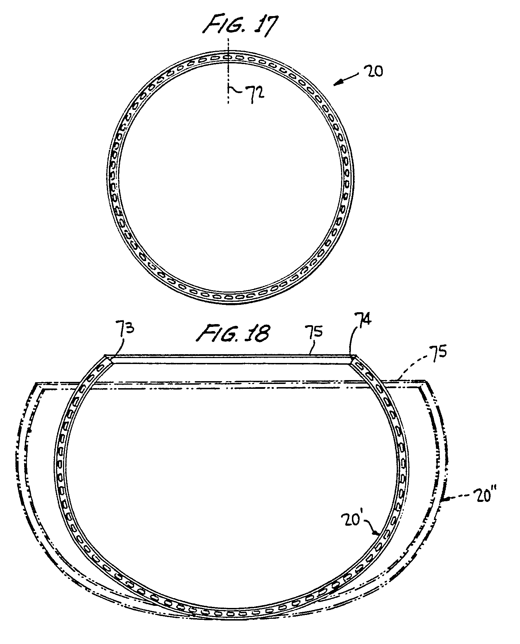

From the foregoing it can be seen that a double-walled web stiffened structural member is capable of being produced according to the invention in a simple and uniform manner of practically any predetermined size, and enjoys a wide variety of uses. For example, member 20 can easily be converted from its cylindrical shape of Figure 17 into a ship's hull shown at 20' or 20" in Figure 18 by simply slitting through the double wall longitudinally along a line 72 parallel to the central axis of the vessel. Free ends 73 and 74 thus formed may then be moved apart a predetermined distance, as by jacking, and a flat deck 75 spanning ends 73 and 74 may be secured thereto so as to convert the member into a submersible or a partly submersible ship's hull having a predetermined beam width without the need for many of the usual structural bulkheads and/or internal supports. The beam width can be varied significantly between hull 20' and 20" without substantially reducing the overall depth of the hull. During the conversion process, it should be pointed out that opposed ends 73 and 74 are spread apart while maintaining, in some conventional manner, a substantially spiral contour for the hull which may be utilized as a freighter, ore boat, super barge, liquid tanker, pressurized seagoing vessel, or the like. And, the structural member according to the invention may be utilized as a storage tank, grain elevator, tunnel, transportation unit, support for an offshore drilling platform, etc. A minimal amount of welding is required to fabricate the present member since the continuous edges of the inner and outer strips may be seamed together via beam or rib 26, and position welding (directed downwardly) for the seaming of both inner and outer strips is more reliable and less time consuming. As the member progresses during fabrication, its dead weight may be supported in a body of water requiring no external mechanical supports outside a floating housing thereby reducing the cost of fabrication and the need for replacement of friction bearings and supports externally of the floating work housing.

Member 80 is likewise capable of being converted into a ship's hull in a similar manner to that aforedescribed. Moreover, member 80 provides the advantage that, during the fabrication process according to a preferred embodiment of the invention, the narrow webs of the spacer ribs need not be tracked as in the first embodiment of the present design since the tips of these webs are now welded along confronting respective surfaces of the inner and outer strips. And, since during the winding of the ribs the web tips of the inner section slightly fan out and the web tips of the outer section slightly contract, care must be taken in properly cutting the beam web along an undulating line so that the tips of the castellated webs produced will match as closely as possible during the fabrication process. The present invention avoids these potential difficulties because the web tips between beam sections do not confront and need not match.

Inherent in the type of member construction of the invention is an overall buckling strength sufficient to eliminate the need for intermediate bulkheads or deep frames. Also, the ability to use thinner plates provides superior physical and mechanical properties and is less limiting in construction capabilities. The fabrication process is unique in that it provides for a continuous, automated and integrated operation. Labour costs are reduced and required skills are minimal. Layout, cutting, shaping, welding and weld testing, blasting, and painting of metallizing occur sequentially. There is economy in the capital expenditures since the requirement for costly items such as welding manipulators, ways and scaffolds, bending rolls and process for precision cutting, edge preparation equipment, and overhead cranes, are minimal or non-existent. Internal bulkheading and end-capping of the vessel is enhanced by the ability to roll the member to any position for fitting and welding. With the use of a body of water to support the completed portion of the member, the production facility is rendered portable and relatively inexpensive thereby leading to savings in freight on tunnel projects, supports, etc.

Unsinkable monolithic hulls can be produced by filling the space between inner and outer walls with a high buoyancy, low water absorption, rigid, urethane foam. As each helical segment of the member is completed, the foam system components may be metered, mixed, and dispensed as a liquid stream into the cavity, where they react and expand to fill the void. During expansion a permanent internal pressure is created as in a pneumatic tyre, additionally strengthening the member. Not only is the resultant member also reliably buoyant but the insulating efficiency of foam further increases the uses of the present member for the storage of, or operation in extreme cold or hot climates. For ultra-compressive strength and/or rigidity, various concrete formulations can be injected into the space between the walls using a similar technique. Further, by varying the density of the concrete mixture, the weight/displacement ratio can be adjusted to meet design requirements in floating arrangements. Moreover, conventional hulls can be produced by axially splitting the member and moving its sides apart a distance up to sixty percent beyond its original diameter. Thus, a lightweight hull is quickly fabricated at minimum costs.

Also, closed member 20, which is an embodiment of the invention, may be utilized for the transport and/or storage of both a liquid and a gas by the provision of a longitudinal flexible diaphragm separating the same, as generally disclosed in U.S. Patent No. 4,000,700.

**Claims**

1. A tubular, helically wound structural member, (20; 80) having spaced inner and outer interconnected walls (24, 38 or 83, 88) wherein said inner wall comprises a helically curved, separate strip of material (24 or 83) forming an inner tubular liner, said outer wall comprises a helically curved, separate strip of material (38 or 88) forming an outer tubular shell, and a helically curved, separate rib stiffener (26 or 81, 82) between and in contact with said liner and said shell, said stiffener spanning contiguous edges (27, 31 or 84, 85) at successive turns of said inner tubular liner and spanning contiguous edges (39, 43 or 87, 89) at successive turns of said outer tubular shell, there being welds (28, 33 or 86) securing together said inner liner edges, and welds (41, 44 or 91) securing together said outer shell edges, and said rib stiffener at the edges of the inner liner and at the edges of the outer shell being secured to said inner liner and to said outer shell via said welds.

2. A method of forming a tubular, helically wound structural member (20; 80) having spaced inner and outer interconnected walls (24, 38 or 83, 88), comprising the steps of:
helically winding one strip of material (24 or 83) to form an inner tubular liner as said inner wall;
helically winding a separate strip of material (38 or 88) to form an outer tubular shell as said outer wall;
disposing a continuous, helically curved, separate rib stiffener (26 or 81, 82) between and in contact with said inner liner and said outer shell, said stiffener spanning contiguous edges (27, 31 or 84, 85) at successive turns of said liner and spanning contiguous edges (39, 43 or 87, 89) at successive turns of said shell;
welding (28, 33 or 86) said liner edges together and to said stiffener (26 or 81) and
welding (41, 44 or 91) said shell edges together and to said stiffener (26 or 82).

3. The method according to Claim 2 characterised in that said steps are carried out in a water buoyant housing (51) floating on a body of water, said housing (51) having an opening (66) in the wall (65) thereof at about the water level with a seal around at least the lower part thereof;
extending the structural member (20; 80) through said opening (66) with said seal preventing ingress of water to the housing (51) while forming said member (20; 80); and
supporting said member (20; 80) by floating same in the body of water.

4. The method according to Claim 3, characterised by further comprising ballast controlling said housing (51) for adjusting the inclination of said housing (51) in relation to any inclination of said structural member (20; 80) outside said housing (51).

5. The method according to any of Claims 2 to 4, characterised by the further steps of longitudinally cutting through said structural member (20) along a single line (72), spreading apart opposed sections (73, 74) of said member after cutting (20'; 20''), and joining said sections together by decking material (75) to form a ship's hull construction.

**Patentansprüche**

1. Rohrförmiges, schraubenförmig gewundenes Bauteil (20; 80), mit voneinander beabstandeten, inneren und äußeren miteinander verbundenen Wänden (24, 38 oder 83, 88), wobei die innere Wand einen schraubenförmig gebogenen, separaten Materialstreifen (24 oder 83), welcher eine innere rohrförmige Auskleidung bildet, und die äußere Wand einen schraubenförmig gebogenen, separaten Materialstreifen (38 oder 88) aufweist, der eine äußere rohrförmige Schale bildet, und wobei eine schraubenförmig gebogene, separate Versteifungsrippe (26 oder 81, 82) zwischen und in Anlage mit der Auskleidung und der Schale angeordnet ist, wobei die Verstärkungsrippe sich zwischen benachbarten Kanten (27, 31 oder 84, 85) bei aufeinanderfolgenden Windungen der inneren rohrförmigen Auskleidung, und zwischen benachbarten Kanten (39, 43 oder 87, 89) bei aufeinanderfolgenden Windungen der äußeren rohrförmigen Schale erstreckt, wobei Schweißstellen (28, 33 oder 86), die die inneren Auskleidungskanten zusammenhalten, und Schweißstellen (41, 44 oder 91), die die äußeren Verkleidungskanten zusammenhalten, vorgesehen sind und die Versteifungsrippe an den Kanten der inneren Auskleidung und an den Kanten der äußeren Schale über diese Schweißstellen mit der inneren Auskleidung und der äußeren Schale fest verbunden ist.

2. Verfahren zur Ausbildung eines rohrförmigen, schraubenförmig gewundenen Bauteils (20; 80), mit voneinander beabstandeten, inneren und äußeren miteinander verbundenen Wänden (24, 38 oder 83, 88), das folgende Schritte aufweist:

Schraubenförmiges Biegen eines Materialstreifens (24 oder 83), um eine innere rohrförmige Auskleidung als die innere Wand auszubilden;

schraubenförmiges Biegen eines separaten Materialstreifens (38 oder 88), um eine äußere rohrförmige Schale als die äußere Wand auszubilden;

Anordnung einer kontinuierlichen, schraubenförmig gebogenen, separaten Verstärkungsrippe (26 oder 81, 82) zwischen und in Berührung mit der inneren und der äußeren Schale, wobei die Verstärkungsrippe sich zwischen benachbarten Kanten (27, 31 oder 84, 85) bei aufeinanderfolgenden Windungen der Auskleidung und zwischen benachbarten Kanten (39, 43 oder 87, 89) bei aufeinanderfolgenden Windungen der Schale erstreckt;

Schweißen (28, 33 oder 86) der Auskleidungskanten zusammen und an die Verstärkungsrippe (26 oder 81) und

Schweißen (41, 44 oder 91) der Kanten der Schale zusammen und an die Verstärkungsrippe (26 oder 82).

3. Verfahren nach Anspruch 2, dadurch gekennzeichnet, daß die Verfahrensschritte in einem im Wasser schwimmfähigen Gehäuse (51) durchgeführt werden, das in einer Wassermasse schwimmt, wobei das Gehäuse (51) eine Öffnung (66) in seiner Wand (65) etwa in Wasserspiegelhöhe aufweist, wobei eine Dichtung mindestens um deren unteren Teil angeordnet ist;

daß sich das Bauteil (20; 80) durch die Öffnung (66) erstreckt, wobei die Dichtung den Wassereintritt in das Gehäuse (51) während der Ausbildung des Bauteils (20; 80) verhindert, und

daß das Bauteil (20; 80) abgestützt wird, indem es in der Wassermasse schwimmt.

4. Verfahren nach Anspruch 3, dadurch gekennzeichnet, daß das Gehäuse (51) steuernder Ballast für die Einstellung der Neigung des Gehäuses (51) im Verhältnis zu jeder Neidung des Bauteils (20; 80) außerhalb des Gehäuses (51) vorgesehen ist.

5. Verfahren nach einem der Ansprüche 2 bis 4, dadurch gekennzeichnet, daß als weiterer Schritt das Bauteil (20) in Längsrichtung entlang einer einzigen Linie (72) durchgeschnitten wird, daß die gegenüberliegenden Teile (73, 74) des Bauteils nach dem Schneiden (20', 20") auseinander bewegt werden und die Abschnitte durch ein ein Deck bildendes Material (75) miteinander verbunden werden, um einen Schiffsrumpfaufbau zu bilden.

**Revendications**

1. Corps structural tubulaire, enroulé en hélice, (20; 80) comportant des parois intérieure et extérieure espacées reliées l'une à l'autre (24, 38 ou 83, 88) dans lequel ladite paroi intérieure est constituée par une bande de matière indépendante, courbée en hélice (24 ou 83) formant une doublure tubulaire intérieure, ladite paroi extérieure comporte une bande de matière indépendante, courbée en hélice (38 ou 88) formant une coque tubulaire extérieure, et un raidisseur en nervure indépendant, courbé en hélice (26 ou 81, 82) interposé entre ladite doublure et ladite coque et en contact avec elles, ledit raidisseur chevauchant des bords contigus (27, 31 ou 87, 89) de spires successives de ladite doublure tubulaire intérieure et chevauchant des bords contigus (39, 43 ou 87, 89) de spires successives de ladite coque tubulaire extérieure, avec des soudures (28, 33 ou 86) fixant l'un à l'autre lesdits bords de doublure intérieure, et des soudures (41, 44 ou 91) fixant l'un à l'autre lesdits bords de coque extérieure, et ledit raidisseur en nervure aux bords de la doublure intérieure et aux bords de la coque extérieure étant fixé à ladite doublure intérieure et à ladite coque extérieure via lesdites soudures.

2. Procédé de façonnage de corps structural tubulaire enroulé en hélice (20; 80) comportant des parois intérieure et extérieure reliées entre elles (24, 38 ou 83, 88), comprenant les opérations de:

enrouler en hélice une bande de matière (24 ou 83) pour façonner une doublure tubulaire intérieure en tant que ladite paroi intérieure;

enrouler en hélice une bande de matière indépendante (38 ou 88) pour façonner une coque tubulaire extérieure en tant que ladite paroi extérieure;

disposer un raidisseur en nervure indépendant continu, courbé en hélice, (26 ou 81, 82) entre ladite doublure intérieure et ladite coque extérieure et en contact avec elles, ledit raidisseur chevauchant des bords contigus (27, 31 ou 84, 85) de spires successives de ladite doublure et chevauchant des bords contigus (39, 43 ou 87, 89) de spires successives de ladite coque;

souder (28, 33 ou 86) lesdits bords de doublure l'un à l'autre et audit raidisseur (26 ou 81) et

souder (41, 44 ou 91) lesdits bords de coque l'un à l'autre et audit raidisseur (26 ou 82).

3. Procédé selon la revendication 2 caractérisé en ce que lesdites opérations sont effectuées dans un logement flottable (51) flottant sur une masse d'eau, ledit logement (51) présentant une ouverture (66) ménagée dans sa paroi (65) à peu près au niveau de l'eau avec un joint d'étanchéité au moins autour de la partie inférieure;

on fait passer le corps structural (20; 80) à travers ladite ouverture (66), ledit joint empêchant la pénétration d'eau dans le logement (51) pendant le façonnage dudit élément (20; 80) et

on supporte ledit corps (20; 80) en le faisant flotter dans la masse d'eau.

4. Procédé selon la revendication 3, caractérisé en ce qu'il comprend encore le réglage par lest dudit logement (51) pour ajuster l'inclinaison dudit logement (51) par rapport à toute inclinaison présentée par ledit corps structural (20; 80) à l'extérieur dudit logement (51).

5. Procédé selon l'une quelconque des revendications 2 à 4, caractérisé par les opérations supplémentaires de coupe longitudinale opérée à travers ledit organe structural (20) suivant une seule ligne (72), d'écartement de sections opposées (73, 74) dudit élément apparaissant après la coupe (20'; 20") et de jonction desdites sections l'une à l'autre par du matériau de pontage (75) pour la réalisation d'une structure en coque de navire.

Fig.1

Fig.2

Fig.3

Fig.4

FIG. 6

FIG. 14

FIG. 13

38    46    38

26a

34

FIG. 6

24    36    24

67    69    20

65    66

55

M

56    57

58

54

0 127 248

2

65

49

FIG. 5

17

25

6    6

25

25

25

14    14

49

49

52    AIR
SUPPLY
68    17

38    38

21

FIG. 7

FILLET WELD OUTER STRIP

MAJOR WELD OUTER STRIP

AUTOMATIC ULTRA-SONIC INSPECTION STATION OF MAJOR WELD

26a

26b

8

8

8

24

27

31

38  39  43

42

45

10

46

11

32  10

11

30a

LAP FIT AND FILLET WELD INNER STRIP

AUTOMATIC ULTRA-SONIC INSP. STATION OF MAJOR WELD

25

25

30

9

9

9

RIB WEB WELD

35

SANDBLAST CHAMBER

47

PAINT AND DRYING CHAMBER

48

49

49

49

52

52

37

MAJOR WELD INNER STRIP

FIG. 8

24  28a  26b

27  28

FIG. 9

26a

26b

33a

33  24  24  31

FIG. 10

41  39  38

26a

26b

24

FIG. 11

43  46  40  39

38

44

38  26a

26a

3

0 127 248

FIG. 15

FIG. 16

FIG. 12

*FIG. 17*

*FIG. 18*

FIG. 20

FIG. 22

FIG. 19

FIG. 21

0 127 248